# EUROPEAN PATENT APPLICATION

(11) **EP 3 489 710 A1**
(43) Date of publication of application: **29.05.2019**
(21) Application number: 17203340.9
(22) Date of filing: 23.11.2017
(51) Int. Cl.: G01S 7/02, G01S 7/35, G01S 13/93, G01S 7/40, G01S 7/292

(54) **RADAR INTERFERENCE SUPPRESSION**

(71) Applicant: Veoneer Sweden AB, 447 83 Vårgårda (SE)
(72) Inventor: Moss, Jonathan, 85778 Haimhausen (DE); Lefevre, Andreas, 97717 Euerdorf (DE)
(74) Representative: Sandstedt, Jonas Sven James

(57) **Abstract**

A method for suppressing interference in a radar signal, comprising obtaining time domain samples of the radar signal, transforming the time domain samples to frequency domain samples of the radar signal, selecting a subset of the frequency domain samples based on a spectral property of the interference, generating modified frequency domain samples of the radar signal by reducing a magnitude of the selected subset of frequency domain samples, inverse transforming the modified frequency domain samples to modified time domain samples of the radar signal, and replacing a first subset of the obtained time domain samples of the radar signal by corresponding modified time domain samples of the radar signal, thereby generating an interference suppressed radar signal.

## Description

### DESCRIPTION OF THE DISCLOSURE

The present disclosure relates to interference in radar signals, and in particular to suppression of such interference. The radar systems discussed herein are suitable as vehicle radar systems.

Many vehicle radar systems comprise radar transceivers that are arranged for generating radar signals that are transmitted, reflected and received by means of appropriate antennas comprised in the radar system. The radar signals may for example be in the form of FMCW (Frequency Modulated Continuous Wave) signals where frequency chirp signals are formed in a well-known manner.

In a multi-radar environment, other radars can create interference with each other when the frequency chirps cross, or come close to each other in frequency. This exhibits itself as a burst of interference somewhere within the received signal during one or more of the chirp signals. This problem becomes apparent when the received analogue signal has been converted to a digital signal and typically is processed by the radar system using one or more FFT (Fast Fourier Transform) processing steps which converts signals in digital time domain into frequency domain signals.

If the interference is present in one or more of the chirp signals, the noise floor will be raised since the noise may be spread across a wide band of frequencies. This raising of the noise floor has the effect of reducing the range and accuracy of the radar, which of course is undesirable.

WO 98/33073 discloses an arrangement for radar interference suppression. The disclosed interference suppressor mitigates interference by replacing interfered radar signal samples by values derived from previous and future radar sample values, in the time domain.

EP3173812 A1 also discloses an arrangement for radar interference suppression. Here, interference mitigation is achieved by generation of an approximation signal which is used to selectively replace interfered radar signal samples. The approximation signal is generated based on frequency domain processing.

However, additional interference suppression methods are desired.

It is an object of the present disclosure to provide improved methods and devices for interference suppression in radar signals.

This object is achieved by a method for suppressing interference in a radar signal. The method comprises obtaining time domain samples of the radar signal, transforming the time domain samples to frequency domain samples of the radar signal, and selecting a subset of the frequency domain samples based on a previously determined spectral property of the interference. The method also comprises generating modified frequency domain samples of the radar signal by reducing a magnitude of the selected subset of frequency domain samples, inverse transforming the modified frequency domain samples to modified time domain samples of the radar signal, and replacing a first subset of the obtained time domain samples of the radar signal by corresponding modified time domain samples of the radar signal, thereby generating an interference suppressed radar signal.

The object is also achieved by a signal processing device arranged to suppress interference in a radar signal. The device comprises an input port arranged to obtain time domain samples of the radar signal, and a digital signal processor unit arranged to transform the time domain samples to frequency domain samples of the radar signal. The digital signal processor unit is arranged to select a subset of the frequency domain samples based on a previously determined spectral property of the interference, and to generate modified frequency domain samples of the radar signal by reducing a magnitude of the selected subset of frequency domain samples. The digital signal processor unit is also arranged to inverse transform the modified frequency domain samples to modified time domain samples of the radar signal, and to replace a first subset of the obtained time domain samples of the radar signal by corresponding modified time domain samples of the radar signal, thereby generating an interference suppressed radar signal.

By means of the disclosed methods and signal processing devices, improved interference suppression in radar signals is obtained. For instance, the technique is adaptable to different types of interference due to the processing based on the determined spectral property of the interference. The selecting a subset of the frequency domain samples based on a previously determined spectral property of the interference is an improved variant of selecting which selects fewer samples but with increased selection accuracy compared to known methods. By selecting fewer samples for the amplitude reducing, an increased number of samples are retained to generate the modified time domain samples of the radar signal, which becomes more accurate.

A number of further advantages are obtained by means of the present disclosure. Mainly, a vehicle radar system is provided that is able to provide removal of interference such that the interference level after FFT processing is at a lower level than previously. This results in reduced range reduction of the radar system and in increased accuracy. Further, the removal of interference reduces the potential for false targets being found at the target identification stage.

### BRIEF DESCRIPTION OF THE DRAWINGS

The present disclosure will now be described more in detail with reference to the appended drawings, where:
Figure 1 shows a schematic top view of a vehicle;
Figure 2 shows a simplified schematic of a radar system;
Figure 3 shows an example of an FMCW chirp signal;
Figure 4 schematically illustrates components of a signal processing device.
Figures 5A-5D are flowcharts illustrating methods according to the present disclosure;
Figure 6 shows three exemplary graphs of radar signals;
Figure 7A shows an exemplary graph of a radar signal;
Figure 7B shows an exemplary graph of a radar signal after Fourier transform processing;
Figure 7C shows an exemplary graph of a radar signal;
Figures 8A-8C are flowcharts illustrating examples of methods for processing radar signals;

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

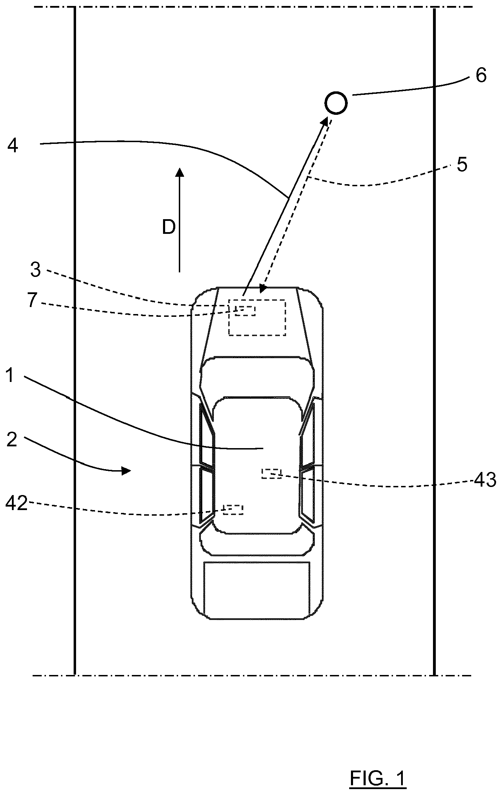

Figure 1 schematically shows a top view of a vehicle 1 arranged to travel on a road 2 in a direction D. The vehicle 1 comprises a vehicle radar system 3 which is arranged to distinguish and/or resolve targets from the surroundings by transmitting radar signals 4 and receiving reflected radar signals 5, and using a Doppler effect in a previously well-known manner.

The vehicle radar system 3 comprises a radar transceiver arrangement 7 and is arranged to provide, e.g., azimuth angle and radial velocity of possible target objects 6 by simultaneously sampling and analyzing phase and amplitude of the received signals 5. The distance to said target object 6 is according to some aspects also acquired. The radar signals may for example be in the form of FMCW (Frequency Modulated Continuous Wave) radar signals operating at about 77 GHz.

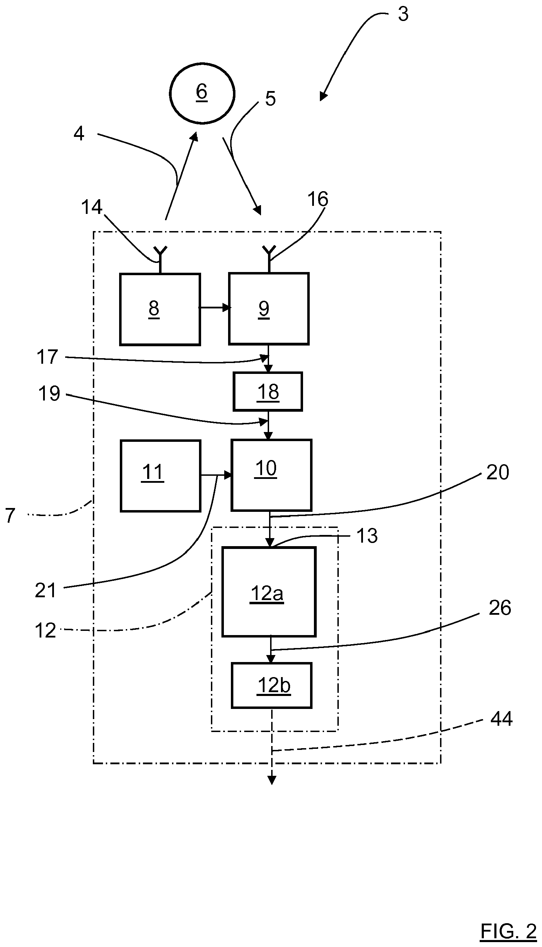

With reference also to Figure 2, the vehicle radar system 3 comprises a transceiver arrangement 7 that is arranged for generating and transmitting radar signals 4, e.g., in the form of FMCW chirp signals, and to receive reflected radar signals 5, where the transmitted signals have been reflected by an object 6.

The transceiver arrangement 7 comprises a transmitter 8 with a transmit antenna arrangement 14, a receiver 9 with a receiver antenna arrangement 16, an Analog to Digital Converter (ADC) arrangement 10 and sampling and timing arrangement 11.

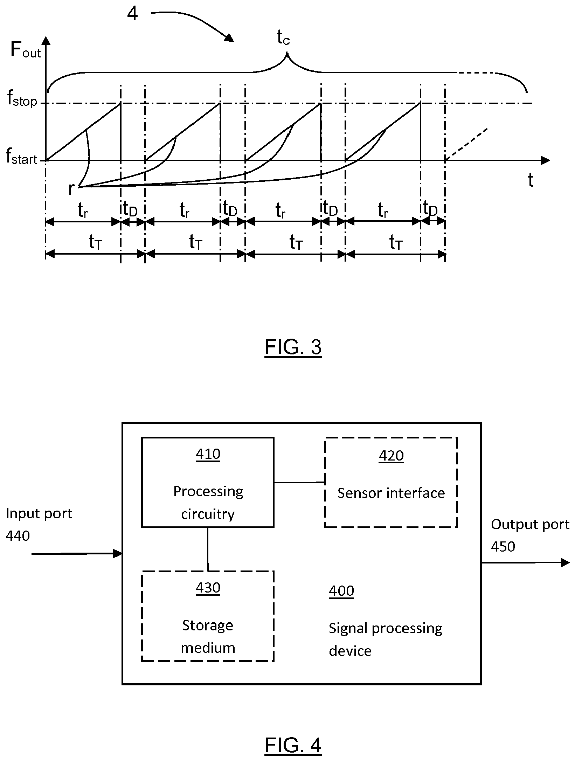

As exemplified in Figure 3, a transmitted FMCW signal 4 is in the form of a continuous wave where the output frequency Fₒᵤₜ may vary from a first frequency fₛₜₐᵣₜ to a second frequency fₛₜₒₚ over the course of a ramp r, where each signal 4 comprises repeating cycles of a plurality of frequency ramps r. A radar signal such as the radar signal exemplified in Figure 3 may be called a chirp signal.

A cycle for such a chirp signal lasts for a certain cycle time t_{c}, each ramp r lasts a certain ramp time tᵣ, having a ramp period time t_{T}. Between two consecutive ramps of the chirp signal there is a delay time t_{D}.

Referring to Figure 2, the reflected signals 5 are received by the receiver 9 via the receiver antenna arrangement 16.

According to an example implementation, the received signals 5 are mixed with the transmitted signals 4 in the receiver 9. This may be a single channel mixer, or a two-channel mixer comprising both in-phase and quadrature components. In this way, an IF (Intermediate Frequency) signal or baseband signal 17 is acquired, which may be real or, in the case of a quadrature mixer, imaginary and real, i.e., complex. The signal 17 is filtered in a filter 18 such that a filtered signal 19 is obtained.

The difference frequency of the filtered signal 19 depends on the target distance and is transferred to the corresponding ADC arrangement 10, where the filtered signal 19 is sampled at a certain predetermined sampling frequency fₛ and converted to a discrete time digital signal 20 comprising samples in a previously known manner. The sampling frequency fₛ is provided in the form of a sampling and timing signal 21 produced by the sampling and timing arrangement 11 that is connected to the ADC arrangement 10.

The ADC arrangement 10 is connected to a signal processing device 12a arranged to suppress interference in the received radar signal.

Herein, it is assumed that the received radar signal comprises interference. In case the received radar signal is free from interference, the methods of interference suppression disclosed herein are not necessary. According to an example implementation, the methods for interference suppression disclosed herein are only executed when a significant level of interference exists in the received radar signal, and not otherwise.

It is appreciated that the term 'interference' is here to be interpreted broadly to comprise any signal component or signal comprised in the radar signal which has a detrimental effect on performance of a system making use of the received radar signal. Consequently, interference may comprise any of, e.g., external interference from other transmitters and radio frequency sources, internal interference from circuitry of the radar transceiver or other active components located close to the radar receiver, and pulsed interference signals which are associated with limited time duration.

Figure 4 schematically illustrates, in terms of a number of functional units, the components of a signal processing device 400 according to an embodiment. Processing circuitry 410 is provided using any combination of one or more of a suitable central processing unit (CPU), multiprocessor, microcontroller, digital signal processor (DSP), dedicated hardware accelerator, etc., capable of executing software instructions stored in a computer program product, e.g. in the form of a storage medium 430. The processing circuitry 410 may further be provided as at least one application specific integrated circuit (ASIC), or field programmable gate array (FPGA).

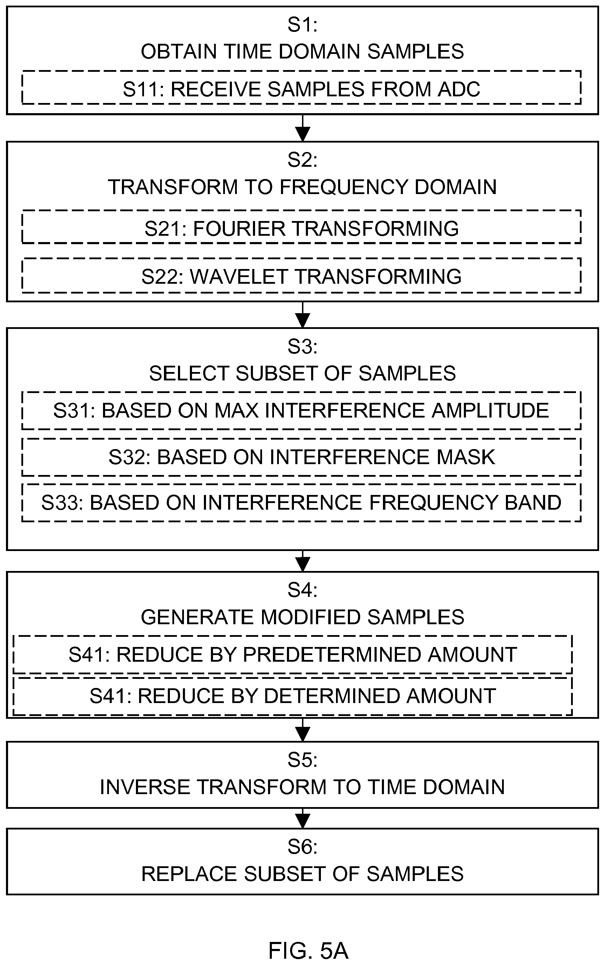

Particularly, the processing circuitry 410 is configured to cause the signal processing device 400 to perform a set of operations, or steps. These operations, or steps, are discussed below in connection to Figures 5A-5D. For example, the storage medium 430 may store the set of operations, and the processing circuitry 410 may be configured to retrieve the set of operations from the storage medium 430 to cause the control node 400 to perform the set of operations. The set of operations may be provided as a set of executable instructions. Thus, the processing circuitry 410 is thereby arranged to execute methods as herein disclosed.

The storage medium 430 may also comprise persistent storage, which, for example, can be any single one or combination of magnetic memory, optical memory, solid state memory or even remotely mounted memory.

The signal processing device 400 may further comprise a communications interface 420 for communications with at least one sensor device, i.e., a sensor interface 420. As such, the sensor interface 420 may comprise one or more transmitters and receivers, comprising analogue and digital components and a suitable number of ports for wired or wireless communication.

The processing circuitry 410 is adapted to control the general operation of the control node 400 e.g. by sending data and control signals to the sensor interface 420 and the storage medium 430, by receiving data and reports from the sensor interface 420, and by retrieving data and instructions from the storage medium 430. Other components, as well as the related functionality, of the control node 400 are omitted in order not to obscure the concepts presented herein.

The signal processing device 400 comprises an input port 440 for obtaining signal samples, and an output port 450 for outputting signal samples.

Figures 5A-5D are flowcharts illustrating methods according to the present disclosure, which may be implemented, e.g., by the signal processing device 400 discussed in connection to Figure 4 above.

Figure 5A shows a method for suppressing interference in a radar signal. The method comprises obtaining S1 time domain samples of the radar signal. These time domain samples may according to some aspects be obtained directly from an analog to digital converter, ADC, S11 arranged to convert an analog radar signal into discrete time domain samples of the radar signal. The time domain samples may also be obtained from an external data source, possibly a remote data source via a communications link.

The method also comprises transforming S2 the time domain samples to frequency domain samples of the radar signal. This transform, according to some aspects, comprises Fourier transforming S21 by any of a Discrete Time Fourier transform, DFT, or a Fast Fourier Transform, FFT, or a wavelet transform S22. The FFT and DFT implementations of the Fourier transform are well-known. A time domain signal, comprising time domain samples, are transformed into a frequency domain signal comprising frequency domain samples. A wavelet transform is a well-known transform related to the Fourier transform, which provides additional information compared to the Fourier transform.

The method further comprises selecting S3 a subset of the frequency domain samples based on a spectral property of the interference. The step of selecting based on a spectral property of the interference is key to at least some of the advantages obtained from the disclosed method. Having prior knowledge of a spectral property of an interfering signal comprised in the received radar signal samples, it is possible to select samples in frequency domain which are heavily influenced by the interference signal. Knowledge of a spectral property of the interference signal may also be obtained from analysis of the obtained radar signal samples in real time, or near real time, as will be further discussed below.

Herein, the term spectral property is given a broad interpretation. A spectral property may, e.g., comprise any of a maximum amplitude of a spectral component comprised in the interference, a spectral mask associated with the interference, a frequency band of the interference, a band-width of the interference.

It is appreciated that said spectral property of the interference may be inferred from spectral knowledge of the transmitted radar signal. By assuming the received signal comprises the transmitted radar signal and interference, the spectral properties of the interference can be inferred by determining the spectral properties of the transmitted radar signal, and comparing to spectral properties of the received radar signal. Consequently, according to some aspects, selecting S3 a subset of the frequency domain samples based on a spectral property of the interference is equivalent to selecting S3 a subset of the frequency domain samples based on a spectral property of a transmitted radar signal.

The disclosed method assumes that interference is present in the obtained time domain samples of the radar signal. If the obtained time domain samples of the radar signal are free from interference, then the method may not be executed since there would be no time domain signals needing to be replaced. Consequently, according to some aspects, the method comprises an initial determining of if the obtained time domain samples of the radar signal comprise interference to warrant execution of the disclosed methods. Also, according to some aspects, the method comprises terminating execution in case the obtained time domain samples of the radar signal does not comprise interference in sufficient quantity, or in particularly damaging sections of the time domain signal to warrant interference suppression.

According to an aspect, if there are no time domain samples detected with interference, then the method illustrated in Figure 5A is not executed. However, according to some other aspects, the operations illustrated in Fig 5A would nevertheless be executed, and simply no samples would be replaced. This is because detection of interference bursts and the generation of the approximation signal may be performed by parallel processing hardware elements. Hence it is time efficient for both processes to run concurrently and not serially.

It is appreciated that the center portion of a time domain chirp radar signal is most sensitive to interference since each chirp is windowed which suppresses the amplitude of the signal at the start and end.

According to aspects, the approximation signal is generated for each chirp whether used or not. According to such aspects, the radar-based sensor system is designed for worst-case processing load, where there is limited benefit in switching hardware blocks off.

According to an example, said initial determining of if the obtained time domain samples of the radar signal comprise interference to warrant execution of the disclosed methods comprises matched filtering by a filter matched to the transmitted radar signals. The output of this filter is then extracted from the obtained time domain samples of the radar signal. The power of the difference signal is then measured. An increased power level of this difference signal indicates the presence of interference in the obtained time domain samples of the radar signal.

According to another example, said initial determining of if the obtained time domain samples of the radar signal is affected by interference comprises filtering the obtained time domain samples with a filter having a high pass characteristic to filter out the expected radar signal. The power of the filtered signal is then measured. An increased power level of this filtered signal indicates the presence of interference in the obtained time domain samples of the radar signal.

According to a further example, a spectral property of the interference is known a-priori, such that a filter matched to the interference can be implemented. The power of the signal from the matched filter is then measured. An increased power level of this filtered signal indicates the presence of interference in the obtained time domain samples of the radar signal.

According to yet another example, a higher layer algorithm or application detects the presence of interference by detecting a significant change in estimated target object parameters. For example, if an estimated distance to a given stationary target object changes rapidly, then interference may be suspected.

The above examples of initial determining of if the obtained time domain samples of the radar signal comprise interference to warrant execution of the disclosed methods may, according to aspects, also be used to determine a time window of the interference, i.e., when in time the interference starts, and when in time it stops. It is appreciated that the interference may be present in a plurality of separate blocks, or signal sections, within the time domain signal obtained from a single chirp.

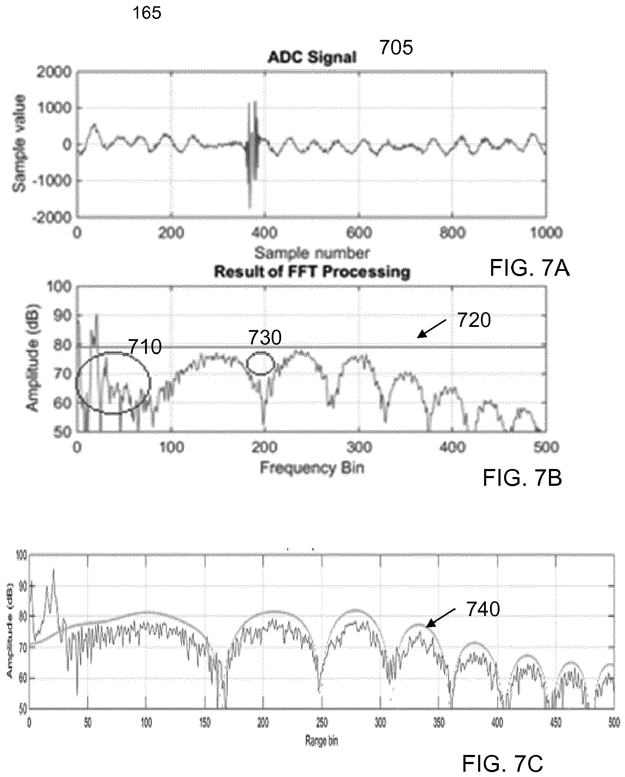

According to some aspects, the selecting S3 comprises selecting S31 a subset of the frequency domain samples which selected samples have amplitudes below a maximum amplitude of a spectral component comprised in the interference. This way, a received reflection 5 from an object 6 is generally not selected if it is associated with amplitudes above that of the maximum amplitude of the spectral component comprised in the interference, while interference samples are, in general, selected. An example of the selecting S31 will be discussed below in connection to Figure 7A and Figure 7B.

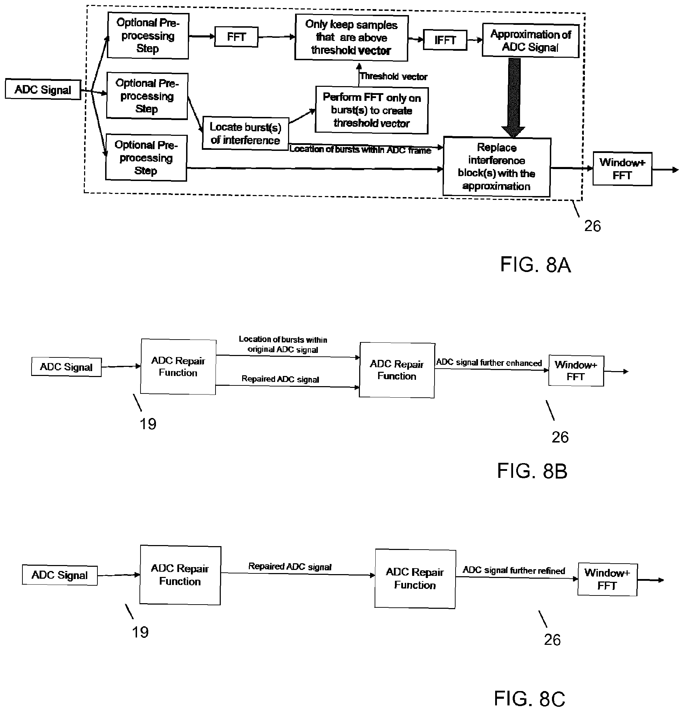

Optionally, the selecting S3 comprises selecting a subset of the frequency domain samples which selected samples have amplitudes below the amplitude of a spectral component comprised in the identified interference regions. A scaling factor may be applied to the interference, to ensure that the frequency components that are retained at S3 can be guaranteed to have a minimum signal to noise ratio. By only retaining spectral components that are at the level of the known noise, the resulting approximation signal will be imprecise. Thus, according to some aspects, a less complex approximation signal is made up of fewer components, and then the whole process is repeated in an iterative manner. Such methods are described in Figure 8B in terms of an iterative process. Each repetition of such "ADC Repair Function", the noise level will be lowered, and so the approximation signal will converge towards the exact true signal.

According to some other aspects, the selecting comprises selecting S32 a subset of the frequency domain samples which selected samples have amplitudes below a spectral mask associated with the interference. This is a more advanced method of selecting S3 a subset of the frequency domain samples based on a spectral property of the interference. A spectral mask is a vector of values which define amplitudes of signal components as function of frequency.

Spectral masks are exemplified in Figure 7B and in Figure 7C. The mask 720 shown in Figure 7B is fixed and does not account for spectral properties of the interference, while the mask 740 exemplified in Figure 7C is generated based on a previously determined spectral property of the interference. By selecting a subset of the frequency domain samples with amplitudes below the mask 720, samples 710 corresponding to a received reflection 5 from an object 6 are often selected since they are associated with amplitudes below the values of the mask 720. The selecting based on the mask 740 is advantageous in that the selection action often results in fewer selected samples. Consequently, more samples are retained, which improves the accuracy of the modified time domain sample signal. It is appreciated that a mask which is constant over frequency may be generated based on a previously determined spectral property of the interference, for instance by configuring the constant value of the mask based on an amplitude value of a spectral component of the interference, although this is not the case for the mask 720 shown in Figure 7B.

According to some other aspects, the selecting comprises selecting S33 a subset of the frequency domain samples which selected samples are comprised in an interference frequency band. Thereby, in case interference is localized to a certain frequency band or bands, it is possible to select samples in frequency domain which are heavily influenced by the interference signal, while not selecting samples corresponding to the received radar reflections 5 from the object 6. The interference frequency band may be determined a-priori, or be determined by FFT processing of an extracted interference signal.

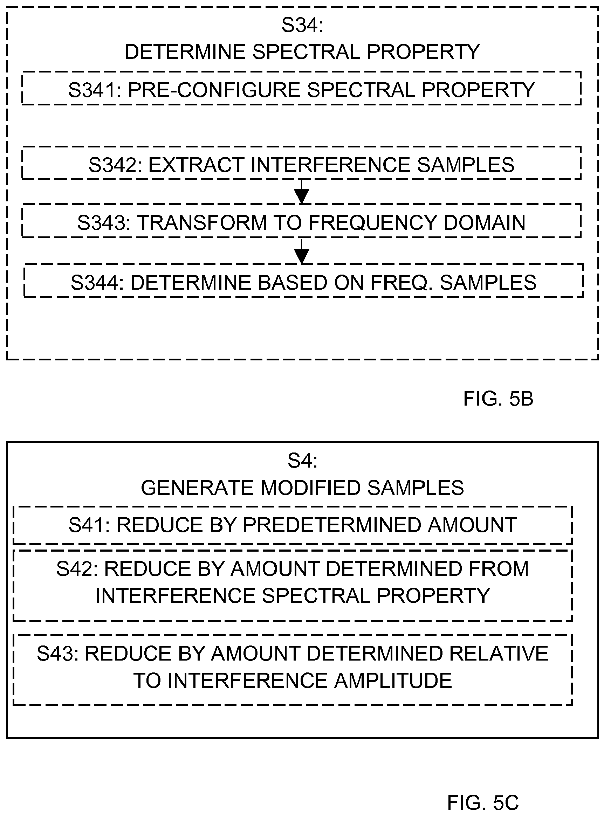

With reference also to Figure 5B, the above discussed selection mechanisms all depend on some knowledge of, or information about, a spectral property of the interference, or, equivalent on some spectral property of the transmitted radar signal burst. This spectral property may be a-priori known from, e.g., measurement campaign or computer simulation. Thus, according to some aspects, the method comprises pre-configuring S341 the spectral property of the interference. The pre-configured spectral property can then be retrieved, e.g., from a storage medium 430 and used in the method.

Said spectral property can also be determined by analysis of the received radar samples. As an example of such analysis, consider a scenario where it is possible to approximately identify a frequency band or time window which is dominated by interference. For instance, the interference may comprise a short burst of interference localized in time to a time window of the interference. It is then possible to extract the interference signal from the received radar signal, and to determine the spectral property or properties from the extracted interference by means of, e.g., Fourier transform.

Consequently, according to some aspects, the method comprises extracting S342 a subset of the obtained time domain samples of the radar signal corresponding to a time window of the interference, transforming S343 the extracted time domain samples to frequency domain samples of the interference, and determining S344 the spectral property of the interference based on the frequency domain samples of the interference.

According to some aspects, a high pass filter (HPF) followed by a magnitude and thresholding technique is configured to detect where the interference is present by identifying a series of sample points that are above a threshold, such as a pre-determined threshold. A typical implementation may comprise using an HPF with coefficients [1 -1], i.e., defined by abs(x(n)-x(n-1)). A test for interference is then whether abs(x(n)-x(n-1)) > T. The threshold T is, according to some aspects, pre-determined. The threshold T may also be adapted for different scenarios.

US20160291130 A1 discloses a method to detect the position of interference within a time domain signal.

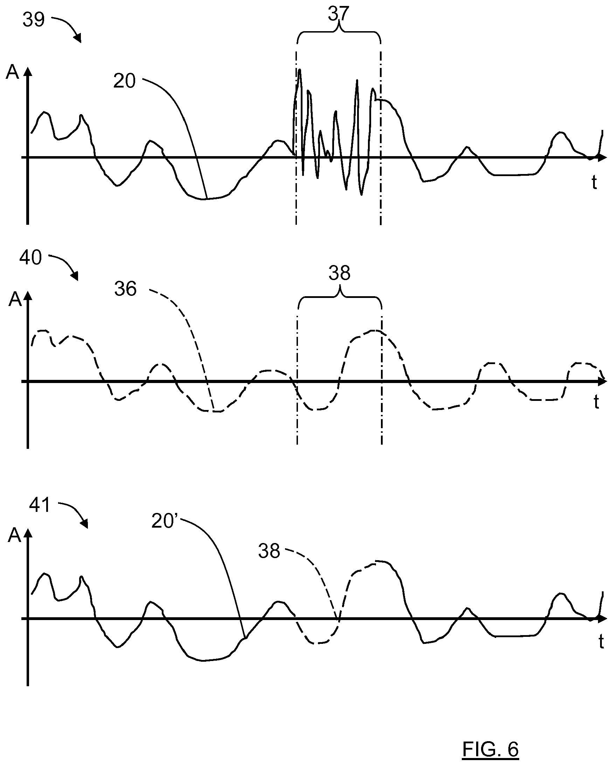

According to some other aspects, prior knowledge that the band is used mainly by other FMCW radars is used to detect a location of chirp signal interference in time or frequency. The most likely interference source will then be a chirp that crosses the transmitted signal at a different gradient 37, see Figure 6. This generates an interference burst that starts at high frequency, goes down to 0Hz, when the two chirps are momentarily at the same frequency, and then increases in frequency again, until they are cut off by a low pass filter (LPF) such as the filter 18.

Of course, different radars use different sections of the frequency band and have different frequency slopes. Some interfering radars will have negative slopes while the radar system 7 may measure on the positive slope, and vice versa. Radars may also be configured to sometimes chirp up and sometimes chirp down.

With regards to identifying the start and stop of each interference burst, the HPF method may indeed not see the "start" of the interference burst since it may be below the detection threshold, and may not see the "end" of the interference burst for the same reason. Therefore, according to some aspects, a typical implementation to determine the start and stop of a burst may apply a rectangular mask, possibly centered on each sample point where the HPF output signal exceeds the threshold T. This guarantees that the whole chirp-down-chirp-up signal is treated as one interference burst with a defined start and stop as shown in Figure 6, reference sign 37.

Mistakenly leaving the center of the chirp-down-chirp-up signal in place could be very damaging to the subsequent processing since even though there may not be any gradient to the time domain signal left in, it could be at quite the wrong amplitude, thus creating steps in the time domain data. An object of the disclosed technique is to avoid such steps. One possible implementation of interference removal is to zero all time domain samples where interference exceeds a threshold - but then many steps or signal discontinuities are likely obtained in the resulting signal. The signal discontinuities produce noise during the Windowing and FFT parts of the processing, which reduces the sensitivity of the radar. An object of the technique is to give a clean continuous signal that looks as close as possible to the non-interference signal.

According to some aspects, with reference to Figure 6, it is possible to analyze the spectral components of the interference block 37 to estimate the gradient of the interference signal and thereby work out more accurately what margin would be needed before and after the main burst to ensure that no interference remains in the modified time domain samples of the radar signal. It is, at times, better for 37 in Figure 6 to be wider than to leave some stray noise samples that will raise the noise floor after the Windowing and FFT processes.

Once the blocks of sample points containing interference are identified, (e.g. three blocks, comprising 20, 30 and 10 samples respectively) these can then be processed using, e.g., a Fourier transform, to obtain the mask. The blocks would be in a time domain vector, where the "clean" time domain samples had all been reduced in magnitude, possibly reduced to zero amplitude. After the FFT, one would normally take the magnitude and multiply by a scaling factor to obtain a threshold (thus ensuring a minimum SNR for all retained spectral components).

With reference also to Figure 5C, the method further comprises generating S4 modified frequency domain samples of the radar signal by reducing a magnitude of the selected subset of frequency domain samples. Thereby, the interference energy in the modified frequency domain samples of the radar signal is reduced compared to the frequency domain samples prior to the magnitude reduction. Furthermore, due to the selecting S3, interference energy is reduced while energy relating to received radar reflections from the object 6 is not reduced in the same amount.

The method also comprises inverse transforming S5 the modified frequency domain samples to modified time domain samples of the radar signal. This vector or collection of modified time domain samples corresponds to the same time window as the obtained time domain samples of the radar signal, but where interference energy has been decreased due to the reducing. However, some radar reflection energy may also have been reduced.

It is appreciated that the above-mentioned approximation signal, according to some aspects, is the same signal as the modified time domain samples of the radar signal.

The method furthermore comprises replacing S6 a first subset of the obtained time domain samples of the radar signal by corresponding modified time domain samples of the radar signal, thereby generating an interference suppressed radar signal. It is appreciated that the described process comprises replacing the interference section with an estimate which may contain a distortion or imperfection - since the estimation is not a perfect replica of the signal. Hence, interference is suppressed or even removed at the expense of possibly incurring some distortion in the replaced section. It is an object of the technique to execute the selection S3 such as to minimize distortion in the replaced section.

A section of the obtained radar signal which is not significantly influenced by interference is maintained as is, while a section of the obtained radar signal which is interfered is substituted for the version where interference energy has been reduced. Thereby, the radar signal, after replacement, in general, comprises less interference energy compared to the obtained radar signal. In other words, advantageously, the disclosed methods increase a measure of signal to interference ratio in the interference suppressed radar signal as compared to the obtained time domain samples of the radar signal.

Further advantages may be obtained by application of more advanced methods of the reducing. For instance, according to some aspects, the generating S4 comprises reducing S41 the magnitude of the selected subset of frequency domain samples by a pre-determined amount. This pre-determined amount may be determined beforehand, e.g., by experimentation, or by computer simulation.

According to further aspects, the generating S4 comprises reducing S42 the magnitude of the selected subset of frequency domain samples by an amount determined based on the spectral property of the interference. As an example, the reducing may be more severe in a frequency band with increased level of interference, and not so severe in a frequency band with a decreased level of interference. The reducing may also be less pronounced in frequency bands where reflections of the radar signal are expected to be located in frequency. This way interference signal is reduced more than the wanted radar signal, thus providing for further increases in signal to interference ratio in the interference suppressed radar signal as compared to the obtained time domain samples of the radar signal.

The reducing may also advantageously be performed as a function of the power of certain spectral components of the interference signal, or based on a determined signal-to-interference and noise ratio (SINR). For instance, according to some aspects, the generating S4 comprises reducing S43 the magnitude of the selected subset of frequency domain samples by an amount determined relative to an amplitude of a spectral component comprised in the interference. Thus, reduction is more pronounced in case interference is strong, and less pronounced if interference is weak. Again, interference signal is reduced more than the wanted radar signal, thus providing for additional increases in signal to interference ratio.

The reducing may also be performed by setting selected signal samples to zero amplitude. This method of reducing provides for a low complexity implementation.

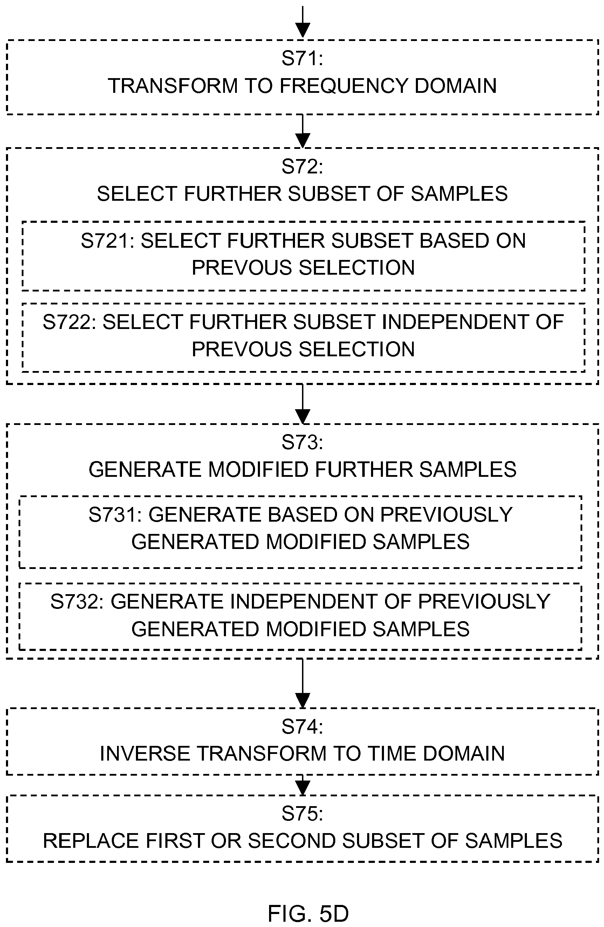

With reference to Figure 5D, the interference suppression may be further enhanced by iteration of the method illustrated in Figure 5A. According to such aspects, the interference suppression may be further improved by repeating the method on the same burst of interference, or on another burst of interference located in a same time span as the first burst of interference.

According to such aspects, the method further comprises transforming S71 samples of the interference suppressed radar signal to frequency domain samples of the interference suppressed radar signal, selecting S72 a further subset of the frequency domain samples based on a further spectral property of the interference, generating S73 modified further frequency domain samples of the radar signal by reducing a magnitude of the selected further subset of frequency domain samples, inverse transforming S74 the modified further frequency domain samples to modified further time domain samples of the radar signal, and replacing S75 the first subset of the interference suppressed radar signal samples, or replacing a second subset different from the first subset, by corresponding modified further time domain samples to generate a further interference suppressed radar signal.

According to some aspects, the disclosed methods also comprise smoothing discontinuities arising when the interference burst is replaced by the approximation signal, for instance by means of linear combining of the two at the boundaries, or by known smoothing filtering techniques.

According to some other aspects, different start-stop positions is used for the second stage repair, e.g., extending out the start-stop to help smooth the discontinuities.

The above discussed methods may be advantageously implemented by a signal processing device 12a, 400 such as that illustrated in Figure 4, arranged to suppress interference in a radar signal. The device comprises an input port 13, 440 arranged to obtain time domain samples of the radar signal, and a digital signal processor unit 410 arranged to transform the time domain samples to frequency domain samples of the radar signal, the digital signal processor unit 410 being arranged to select a subset of the frequency domain samples based on a spectral property of the interference, and to generate modified frequency domain samples of the radar signal by reducing a magnitude of the selected subset of frequency domain samples, the digital signal processor unit further being arranged to inverse transform the modified frequency domain samples to modified time domain samples of the radar signal, and to replace a first subset of the obtained time domain samples of the radar signal by corresponding modified time domain samples of the radar signal, thereby generating an interference suppressed radar signal.

With reference to Figure 1, there is also disclosed herein a vehicle 1 comprising the signal processing device 12a, 400 discussed herein, and at least one transceiver arrangement 7 arranged to generate, transmit and receive reflected radar signal, the transceiver arrangement 7 comprises an ADC arrangement 10 that is arranged to output the time domain samples of the radar signal to the signal processing device.

The signal processing device 12a, 400 comprises an output port 450 arranged to output interference suppressed radar signals to a second DSP function 12b. In those sections that are determined to contain interference, there is only information about the larger targets, so the energy/information about the smaller targets is slightly reduced, but they end up being much more present than when the noise burst is left in the original digital signal 20, without repair.

This is illustrated in Figure 6, where three graphs 39, 40, 41 are shown, all graphs 39, 40, 41 showing amplitude A on their y-axis and time t on their x-axis. A first graph 39 shows the original time domain samples of the radar signal 20 with a period of interference 37. A second graph 40 shows the modified time domain samples of the radar signal 36, and a third graph 41 shows the interference suppressed radar signal 20' where the period of interference 37 from the first graph has been removed and the corresponding signal section 38 from the modified time domain samples of the radar signal 36 has been inserted as replacement. Consequently, the three graphs in Figure 6 illustrates an example of the replacing S6.

The interference suppressed radar signal thus comprises the original time domain samples of the radar signal without the deleted portions, and the equivalent portions of the modified time domain samples of the radar signal 36 are inserted instead of the deleted portions. Only one such deleted portion 37 is shown in the illustrated example, but in practice each radar cycle may comprise one or more such portions that may have originated from one or more external interference sources.

Furthermore, as was discussed in connection to Figure 5A above, the method may be iterated several times to remove a plurality of interference sections from the obtained time domain samples of the radar signal.

As indicated in Figure 1, the vehicle 1 comprises a safety signal processing device 42 and safety means 43, for example an emergency braking system and/or an alarm signal device. The safety signal processing device 42 is arranged to control the safety means 43 in dependence of input from the radar system 3. According to an aspect, the output 44 of the second DSP function 12b constitutes input to the safety signal processing device 42.

The present disclosure is not limited to the examples above, but may vary freely within the scope of the appended claims. For example, the radar system may be implemented in any type of vehicle such as cars, trucks, buses, boats and aircraft as well as fixed radars such as those monitoring traffic flow, marine environments, aircraft landing or presence of pedestrians.

The radar transceiver 7 is adapted for any suitable type of radar signal types, such as Doppler radar types. There may be any number of radar transceivers 7 in the vehicle radar system 3, and they may be arranged for transmission and signals in any suitable direction. The plurality of sensing sectors or sensing bins may thus be directed in other desirable directions, such as rearwards or at the sides of the vehicle 1.

Figure 7A illustrates an example graphs of the time domain samples of the radar signal, referred to in Figure 7A as ADC signal 705. The y-axis of the graph shows sample value, i.e., amplitude in time domain. The x-axis of the top-most graph shows sample number, i.e., time index of the samples. There is a section of interference around time index 350, which ends prior to time index 400. The graph in Figure 7B, shows corresponding frequency domain samples of the radar signal, here obtained from FFT. The y-axis shows amplitude in dB, while the x-axis shows frequency index of the frequency domain samples. The location of reflected radar signal from an object 6 is shown marked by circle.

Figures 7A and 7B illustrate a potential drawback of basing the selecting S3 on a fixed threshold value. I.e., performing the selecting such that all samples with amplitude below a given fixed threshold 720 is selected. It is appreciated that more spectral components are selected for amplitude reduction, thus reducing the accuracy of the approximation signal. This can be understood from analysis of the graph in Figure 7B where sections 710, 730 of relatively low interference power are unnecessarily selected.

Figure 7C also illustrates frequency domain samples of the radar signal, however, here the spectral properties of the interference have been accounted for in the selecting. In Figure 7C, only the samples with amplitudes below that of the frequency variable threshold 740 are selected. This type of threshold 740 may, e.g., be determined based on a spectral mask of the interference signal, as discussed above. It is appreciated that fewer samples are selected compared to in Figure 7B, and especially samples related to useful signal 710 are not selected for amplitude reduction.

Figure 8A illustrates an example method. The example method comprises obtaining an ADC signal 19. The obtained ADC signal corresponds to time domain samples of a radar signal. These samples are optionally pre-processed.

A first branch of the method applies an FFT and selects frequency domain samples which are above a threshold vector. It is appreciated that the selecting and retaining of samples above a threshold and the selecting and reducing of samples below the threshold are equivalent in that the operation results in two sets; one set with amplitudes above the threshold and one set with amplitudes below the threshold, where samples with high amplitudes are retained and other samples reduced in amplitude. An IFFT is then applied to modified frequency domain samples after magnitude reduction and retaining, in order to generate the modified time domain samples of the radar signal. The modified time domain samples of the radar signal are referred to as an approximation of the ADC signal in Figure 8A.

A second branch first locates burst(s) of interference, followed by performing an FFT only on the bursts in order to determine a spectral property of the interference. According to the example of Figure 8A, this spectral property is used in the determining of the threshold vector, which threshold vector may correspond to a spectral mask of the interference in frequency domain.

A third branch performs the replacing S6 according to Figure 5A, where interfered sections of the obtained ADC signal are replaced by the approximation signal.

Figure 8B illustrates another example method. This illustrated method is an iterative method where interference suppression is performed in two stages, referred to as ADC repair function. The ADC signal first undergoes processing corresponding to the method illustrated in Figure 5A, and then undergoes processing corresponding to the illustration in Figure 5D. Thereby, a further interference suppression is obtained since the interference suppression method is executed more than once.

In other words, Figure 8B shows a method for suppressing interference in a radar signal, comprising obtaining time domain samples of the radar signal, transforming the time domain samples to frequency domain samples of the radar signal, selecting a first subset of the frequency domain samples based on a spectral property of the interference, generating modified frequency domain samples of the radar signal by reducing a magnitude of the selected first subset of frequency domain samples, inverse transforming the modified frequency domain samples to modified time domain samples of the radar signal, and replacing a first subset of the obtained time domain samples of the radar signal by corresponding modified time domain samples of the radar signal, thereby generating an interference suppressed radar signal. The illustrated method then continues by transforming samples of the interference suppressed radar signal to frequency domain samples of the interference suppressed radar signal, selecting a second subset of the frequency domain samples, based on the first subset of the frequency domain samples and on a further spectral property of the interference, generating modified further frequency domain samples of the radar signal by reducing a magnitude of the selected further subset of frequency domain samples, inverse transforming the modified further frequency domain samples to modified further time domain samples of the radar signal, and replacing the first subset of the interference suppressed radar signal samples by corresponding modified further time domain samples to generate a further interference suppressed radar signal. Thus, according to aspects, the second ADC repair function shown in Figure 8B executes interference mitigation processing based on a-priori knowledge S721 of the location of bursts, i.e., interference, within the original ADC signal.

According to aspects, the selecting S721 comprises selecting the further subset of frequency domain samples to equal a previously selected subset of frequency domain samples. Thus, interference is further decreased by means of an iterative interference mitigation technique operating on the same frequency domain samples in each iteration.

It is appreciated that any discontinuities introduced by an ADC repair function may be corrected by a following ADC repair function in an iterative manner. Thereby, interference is further mitigated.

Figure 8C illustrates yet another example method. This illustrated method is also an iterative method where interference suppression is performed in two stages, referred to as ADC repair function. The ADC signal first undergoes processing corresponding to the method illustrated in Figure 5A, and then undergoes processing corresponding to the illustration in Figure 5D. However, here the location of the bursts is not passed to the second repair stage, i.e., the second stage is acting blindly and independent of the location of bursts determined by the first stage. Thus, according to aspects, the second ADC repair function shown in Figure 8C executes interference mitigation processing independent of the interference mitigation processing by the first ADC repair function.

In other words, Figure 8C shows a method for suppressing interference in a radar signal, comprising obtaining time domain samples of the radar signal, transforming the time domain samples to frequency domain samples of the radar signal, selecting a first subset of the frequency domain samples based on a spectral property of the interference, generating modified frequency domain samples of the radar signal by reducing a magnitude of the selected first subset of frequency domain samples, inverse transforming the modified frequency domain samples to modified time domain samples of the radar signal, and replacing a first subset of the obtained time domain samples of the radar signal by corresponding modified time domain samples of the radar signal, thereby generating an interference suppressed radar signal. The illustrated method then continues by transforming samples of the interference suppressed radar signal to frequency domain samples of the interference suppressed radar signal, selecting a further subset of the frequency domain samples, independent of the first subset of the frequency domain samples and based on a further spectral property of the interference, generating modified further frequency domain samples of the radar signal by reducing a magnitude of the selected further subset of frequency domain samples, inverse transforming the modified further frequency domain samples to modified further time domain samples of the radar signal, and replacing a second subset different from the first subset, by corresponding modified further time domain samples to generate a further interference suppressed radar signal.

In summary, there has been disclosed herein a method for suppressing interference in a radar signal, comprising;
obtaining S1 time domain samples of the radar signal,
transforming S2 the time domain samples to frequency domain samples of the radar signal,
selecting S3 a subset of the frequency domain samples based on a previously determined spectral property of the interference,
generating S4 modified frequency domain samples of the radar signal by reducing a magnitude of the selected subset of frequency domain samples,
inverse transforming S5 the modified frequency domain samples to modified time domain samples of the radar signal, and
replacing S6 a first subset of the obtained time domain samples of the radar signal by corresponding modified time domain samples of the radar signal, thereby generating an interference suppressed radar signal.

According to aspects, the obtained time domain samples of the radar signal originate from an analog to digital converter S11, ADC, arranged to convert an analog radar signal into discrete time domain samples of the radar signal.

According to aspects, the transforming S2 comprises Fourier transforming S21 by any of a Discrete Time Fourier transform, DFT, or a Fast Fourier Transform, FFT, or a wavelet transform S22.

According to aspects, the selecting S3 comprises selecting S31 a subset of the frequency domain samples which selected samples have amplitudes below a maximum amplitude of a spectral component comprised in the interference.

According to aspects, the selecting comprises selecting S32 a subset of the frequency domain samples which selected samples have amplitudes below a spectral mask associated with the interference.

According to aspects, the selecting comprises selecting S33 a subset of the frequency domain samples which selected samples are comprised in an interference frequency band.

According to aspects, the method comprises pre-configuring S341 the spectral property of the interference.

According to aspects, the method comprises extracting S342 a subset of the obtained time domain samples of the radar signal corresponding to a time window of the interference, transforming S343 the extracted time domain samples to frequency domain samples of the interference, and determining S344 the spectral property of the interference based on the frequency domain samples of the interference.

According to aspects, the spectral property of the interference comprises any of a maximum amplitude of a spectral component comprised in the interference, a spectral mask associated with the interference, a frequency band of the interference, a band-width of the interference.

According to aspects, the generating S4 comprises reducing S41 the magnitude of the selected subset of frequency domain samples by a pre-determined amount.

According to aspects, the generating S4 comprises reducing S42 the magnitude of the selected subset of frequency domain samples by an amount determined based on the spectral property of the interference.

According to aspects, the generating S4 comprises reducing S43 the magnitude of the selected subset of frequency domain samples by an amount determined relative to an amplitude of a spectral component comprised in the interference.

According to aspects, the method further comprises
transforming S71 samples of the interference suppressed radar signal to frequency domain samples of the interference suppressed radar signal,
selecting S72 a further subset of the frequency domain samples based on a further spectral property of the interference,
generating S73 modified further frequency domain samples of the radar signal by reducing a magnitude of the selected further subset of frequency domain samples,
inverse transforming S74 the modified further frequency domain samples to modified further time domain samples of the radar signal, and
replacing S75 the first subset of the interference suppressed radar signal samples, or replacing a second subset different from the first subset, by corresponding modified further time domain samples to generate a further interference suppressed radar signal.

According to aspects, the selecting S72 comprises selecting S721 the further subset of frequency domain samples based on a previously selected subset of frequency domain samples and/or the generating S73 comprises generating S731 the modified further frequency domain samples based on previously generated modified frequency domain samples.

According to aspects, the selecting S72 comprises selecting S722 the further subset of frequency domain samples independent of a previously selected subset of frequency domain samples and/or the generating S73 comprises generating S732 the modified further frequency domain samples independent of previously generated modified frequency domain samples.

There has also been disclosed herein a signal processing device 12a arranged to suppress interference in a radar signal. The device comprises an input port 13 arranged to obtain time domain samples of the radar signal, and a digital signal processor unit arranged to transform the time domain samples to frequency domain samples of the radar signal, the digital signal processor unit being arranged to select a subset of the frequency domain samples based on a previously determined spectral property of the interference, and to generate modified frequency domain samples of the radar signal by reducing a magnitude of the selected subset of frequency domain samples, the digital signal processor unit further being arranged to inverse transform the modified frequency domain samples to modified time domain samples of the radar signal, and to replace a first subset of the obtained time domain samples of the radar signal by corresponding modified time domain samples of the radar signal, thereby generating an interference suppressed radar signal.

There has furthermore been disclosed herein a vehicle 1 comprising the above discussed signal processing device, and at least one transceiver arrangement 7 arranged to generate, transmit and receive reflected radar signal. The transceiver arrangement 7 comprises an ADC arrangement 10 that is arranged to output the time domain samples of the radar signal to the signal processing device.

## Claims

1. A method for suppressing interference in a radar signal, comprising;
obtaining (S1) time domain samples of the radar signal, transforming (S2) the time domain samples to frequency domain samples of the radar signal,
selecting (S3) a subset of the frequency domain samples based on a previously determined spectral property of the interference,
generating (S4) modified frequency domain samples of the radar signal by reducing a magnitude of the selected subset of frequency domain samples,
inverse transforming (S5) the modified frequency domain samples to modified time domain samples of the radar signal,
replacing (S6) a first subset of the obtained time domain samples of the radar signal by corresponding modified time domain samples of the radar signal, thereby generating an interference suppressed radar signal.

2. The method according to claim 1, wherein the obtained time domain samples of the radar signal originate from an analog to digital converter (S11), ADC, arranged to convert an analog radar signal into discrete time domain samples of the radar signal.

3. The method according to any previous claim, wherein the transforming (S2) comprises Fourier transforming (S21) by any of a Discrete Time Fourier transform, DFT, or a Fast Fourier Transform, FFT, or a wavelet transform (S22).

4. The method according to any previous claim, wherein the selecting (S3) comprises selecting (S31) a subset of the frequency domain samples which selected samples have amplitudes below a maximum amplitude of a spectral component comprised in the interference.

5. The method according to any of claims 1-3, wherein the selecting comprises selecting (S32) a subset of the frequency domain samples which selected samples have amplitudes below a spectral mask associated with the interference.

6. The method according to any of claims 1-3, wherein the selecting comprises selecting (S33) a subset of the frequency domain samples which selected samples are comprised in an interference frequency band.

7. The method according to any previous claim, comprising pre-configuring (S341) the spectral property of the interference.

8. The method according to any previous claim, comprising extracting (S342) a subset of the obtained time domain samples of the radar signal corresponding to a time window of the interference, transforming (S343) the extracted time domain samples to frequency domain samples of the interference, and determining (S344) the spectral property of the interference based on the frequency domain samples of the interference.

9. The method according to any previous claim, wherein the spectral property of the interference comprises any of a maximum amplitude of a spectral component comprised in the interference, a spectral mask associated with the interference, a frequency band of the interference, a band-width of the interference.

10. The method according to any previous claim, wherein the generating (S4) comprises reducing (S41) the magnitude of the selected subset of frequency domain samples by a pre-determined amount.

11. The method according to any previous claim, wherein the generating (S4) comprises reducing (S42) the magnitude of the selected subset of frequency domain samples by an amount determined based on the spectral property of the interference.

12. The method according to any of claims 1-11, wherein the generating (S4) comprises reducing (S43) the magnitude of the selected subset of frequency domain samples by an amount determined relative to an amplitude of a spectral component comprised in the interference.

13. The method according to any previous claim, further comprising;
transforming (S71) samples of the interference suppressed radar signal to frequency domain samples of the interference suppressed radar signal,
selecting (S72) a further subset of the frequency domain samples based on a further spectral property of the interference,
generating (S73) modified further frequency domain samples of the radar signal by reducing a magnitude of the selected further subset of frequency domain samples,
inverse transforming (S74) the modified further frequency domain samples to modified further time domain samples of the radar signal,
replacing (S75) the first subset of the interference suppressed radar signal samples, or replacing a second subset different from the first subset, by corresponding modified further time domain samples to generate a further interference suppressed radar signal.

14. The method according to claim 13, wherein the selecting (S72) comprises selecting (S721) the further subset of frequency domain samples based on a previously selected subset of frequency domain samples and/or the generating (S73) comprises generating (S731) the modified further frequency domain samples based on previously generated modified frequency domain samples.

15. The method according to claim 13, wherein the selecting (S72) comprises selecting (S722) the further subset of frequency domain samples independent of a previously selected subset of frequency domain samples and/or the generating (S73) comprises generating (S732) the modified further frequency domain samples independent of previously generated modified frequency domain samples.

16. A signal processing device (12a) arranged to suppress interference in a radar signal, the device comprising an input port (13) arranged to obtain time domain samples of the radar signal, and a digital signal processor unit arranged to transform the time domain samples to frequency domain samples of the radar signal, the digital signal processor unit being arranged to select a subset of the frequency domain samples based on a previously determined spectral property of the interference, and to generate modified frequency domain samples of the radar signal by reducing a magnitude of the selected subset of frequency domain samples, the digital signal processor unit further being arranged to inverse transform the modified frequency domain samples to modified time domain samples of the radar signal, and to replace a first subset of the obtained time domain samples of the radar signal by corresponding modified time domain samples of the radar signal, thereby generating an interference suppressed radar signal.

17. A vehicle (1) comprising the signal processing device according to claim 16, and at least one transceiver arrangement (7) arranged to generate, transmit and receive reflected radar signal, the transceiver arrangement (7) comprises an ADC arrangement (10) that is arranged to output the time domain samples of the radar signal to the signal processing device.
